# EUROPÄISCHE PATENTSCHRIFT

(11) **EP 0 676 440 B1**
(45) Veröffentlichungstag und Bekanntmachung des Hinweises auf die Patenterteilung: **08.12.1999**
(21) Anmeldenummer: 95104392.6
(22) Anmeldetag: 24.03.1995
(51) Int. Cl.: C08J 11/00, C09D 7/00

(54) **Verfahren zur Wiederverwertung von Lackschlamm**
Process for reclaiming lacquer sludges
Procédé pour réutiliser les boues de peintures

(30) Priorität: 06.04.1994 DE 4411753
(43) Veröffentlichungstag der Anmeldung: 11.10.1995
(73) Patentinhaber: BAYER AG, 51368 Leverkusen (DE)
(72) Erfinder: Hovestadt, Wieland, Dr., D-47802 Krefeld (DE); Brück, Jochen, Dr., D-51061 Köln (DE); Blum, Harald, Dr., D-47669 Wachtendonk (DE)

(56) Entgegenhaltungen:
- EP-A- 0 556 670
- EP-A- 0 569 756
- EP-A- 0 613 922

## Beschreibung

Die Erfindung betrifft ein Verfahren zur Aufarbeitung von beim Verspritzen von lösungsmittelhaltigen 1- oder 2-Komponenten-Polyurethanlacken anfallendem Lackschlamm unter Wiederverwertung der dabei isolierten organischen Bestandteile in wasserverdünnbaren Bindemitteln.

Lösungsmittelhaltige 2-Komponenten-Polyurethanlacke des Standes der Technik haben aufgrund ihrer hervorragenden Eigenschaften eine große praktische Bedeutung auf dem Beschichtungssektor gewonnen. Die Lacke werden in der Praxis in der Regel durch Spritzen auf die zu beschichtenden Substrate aufgetragen. Hierbei kann nicht vermieden werden, daß durch "Overspray" erhebliche Mengen des eingesetzten Beschichtungsmittels verloren gehen. In der Praxis werden diese überschüssigen Mengen im allgemeinen mit Hilfe von Wasser aus der Abluft der Beschichtungsanlage ausgewaschen und unter Mitverwendung von Koagulierungsmitteln, wie beispielsweise oberflächenaktiven, anorganischen Materialien wie Tonerde, zur Koagulation gebracht. Dieser Lackschlamm wird bislang in den meisten Fällen als Sondermüll entsorgt.

Die DE-OS 4 204 817 beschreibt ein Verfahren zur Wiederverwertung der Bindemittelbestandteile des Lackschlamms aus 2-Komponenten-Polyuretanlacken als neues lösungsmittelhaltiges Polyol für 2-Komponenten-Polyurethanlacke oder als neues lösungsmittelhaltiges Einbrennbindemittel. Hierbei wird der Lackschlamm, bevor er durch die fortschreitende Vernetzungdreaktion völlig unbrauchbar geworden ist, mit Verbindungen, wie Aminen, zur Reaktion gebracht, die schneller als Waser und als das Polyol mit den Polyisocyanaten reagieren. Die Bindemittel bleiben löslich und können extrahiert und so wiedergewonnen werden.

In der DE-OS 4 214 943 wird offenbart, daß die Blockierung der Polyisocyanate auch schon in der Spritzkabine erfolgen kann, wenn die entsprechenden Verbindungen im Wasser der Kabine gelöst oder emulgiert werden.

Auch die Wiederverwertung des bei der Verarbeitung von feuchtigkeitstrocknenden 1-Komponenten-Polyurethanlacken anfallenden Oversprays wird in den genannten Vorveröffentlichungen angesprochen. So entstehen aus den NCO-Prepolymeren beispielsweise bei Umsetzung mit Aminoalkoholen wiederverwendbare Polyhydroxylverbindungen bzw. bei der Umsetzung mit sekundären Monoaminen Amin-blockierte NCO-Prepolymere, die als Polyolkomponente bzw.-blockierte Polyisocyanatkomponente in neuen Lackansätzen wiederverwendet werden können.

Wie jetzt überraschend gefunden wurde, eignen sich die nach den Verfahren des genannten Standes der Technik in in organischen Lösungsmitteln gelöster Form letztendlich anfallenden modifizierten Bindemittelkomponenten besonders gut als Bindemittelkomponente in wasserverdünnbaren Einbrennlacken auf Basis von durch geeignete Vernetzer vernetzbaren Festharzen. Hierzu werden die in organischer Lösung gewonnenen modifizierten Bindemittelbestandteile vom Lösungsmittel weitgehend befreit und mit dem Festharz eines wasserverdünnbaren Einbrennbindemittels vermischt und mit diesem zusammen in Wasser dispergiert.

Gegenstand der Erfindung ist somit ein Verfahren zur Wiederverwertung des in Form von Lackschlamm beim Verspritzen von lösungsmittelhaltigen 2-Komponenten-Polyurethanlacken oder von feuchtigkeitstrocknenden 1-Komponenten-Polyurethanlacken in Spritzkabinen anfallendem "Oversprays" durch
(i) Isolieren des Lackschlamms unter Einsatz von Wasser und Koaguliermitteln,
(ii) Vermischen des aus Lackbestandteilen und Koaguliermitteln, sowie Wasser bestehenden Lackschlamms, gegebenenfalls nach Entfernung zumindest eines Teils des Wassers, mit einem gegenüber Isocyanatgruppen inerten organischen Lösungsmittel
(iii) Umsetzung der in dem gemäß (ii) erhaltenen Gemisch vorliegenden freien Isocyanatgruppen mit im Sinne der Isocyanat-Additionsreaktion monofunktionnellen Verbindungen eines unter 600 liegenden Molekulargewichts, welche gegenüber Isocyanatgruppen eine höhere Reaktivität aufweisen als Wasser oder als die gegebenenfalls in dem 2-Komponenten-Polyurethanlack mitverwendete Reaktivkomponente mit gegenüber Isocyanatgruppen reaktionsfähigen Gruppen, ausgewählt aus der Gruppe bestehend aus primären Monoaminen mit aliphatisch gebundenen Aminogruppen, sekundären Monoaminen mit aliphatisch gebundenen Aminogruppen, Aminoalkoholen mit einer aliphatisch gebundenen primären oder sekundären Aminogruppe, Oximen, und Gemischen derartiger Verbindungen,
(iv) Befreien der gemäß (iii) anfallenden organischen Phase von gegebenenfalls vorliegenden unlöslichen Bestandteilen und Wiederverwertung der gelösten, organischen Bestandteile,
dadurch gekennzeichnet, daß man
(v) die gemäß (iv) anfallende Lösung der Bindemittel bis auf einen Festkörpergehalt von 60 bis 100 Gew.-% vom Lösungsmittel befreit,
(vi) die gemäß (v) anfallenden, gegebenenfalls noch Lösungsmittel enthaltenden Bindemittel mit dem Festharz wasserverdünnbarer Einbrennbindemittel vermischt und
(vii) die gemäß (vi) anfallende Bindemittelmischung in Wasser dispergiert.

Gegenstand der Erfindung ist auch eine Abänderung dieses Verfahrens, welche darin besteht, die gemäß Verfahrensstufe (iii) einzusetzenden, gegenüber Isocyanatgruppen hochreaktiven Verbindungen bereits in der Verfahrensstufe (i) im Wasser der Spritzkabine gelöst oder emulgiert zum Einsatz zu bringen.

Die beim erfindungsgemäßen Verfahren erhaltenen wäßrigen Dispersionen werden in Kombination mit blockierten Polyisocyanaten oder mit Aminovernetzerharzen in wasserverdünnbaren Einbrennlacken eingesetzt.

Das erfindungsgemäße Verfahren dient vorzugsweise zur Aufarbeitung von Lackschlamm, der bei der Verarbeitung von lösemittelhaltigen 2-Komponenten-Polyurethanlacken anfällt.

Die Polyisocyanatkomponente in derartigen 2-Komponenten-Polyurethanlacken besteht, vorzugsweise aus sogenannten Lackpolyisocyanaten, d.h. aus Biuret-, Isocyanurat-, Urethan-, Allophanat- und/oder Uretdiongruppen aufweisenden Derivaten von einfachen Diisocyanaten wie insbesondere 1,6-Diisocyanatohexan oder Gemischen von 1,6-Diisocyanatohexan mit 1-Isocyanto-3,3,5-trimethyl-5-isocyanatomethylcyclohexan und/oder mit 2,4- und/oder 2,6-Diisocyanatotoluol. Diese an sich bekannten Lackpolyisocyanate weisen im allgemeinen einen Gehalt an monomeren Ausgangsdiisocyanaten von unter 0,5 Gew.-% und einen Gehalt an Isocyanatgruppen von ca. 15 - 25 Gew.-% auf.

Bei den gegenüber Isocyanatgruppen reaktionsfähigen Reaktionspartnern in 2-Komponenten-Polyurethanlacken handelt es sich vor allem um die an sich bekannten höhermolekularen Polyhydroxylverbindungen mit einem Hydroxylgruppengehalt von 0,1 bis 10 Gew.-%. Beispielsweise genannt seien die an sich bekannten hydroxyfunktionellen Polyester, Polyether, Polyacrylate, Polyurethane, Polydienharze und Epoxidharze sowie Mischungen, Kombinationen oder Umsetzungsprodukte derartiger Polyhydroxylverbindungen.

Bei dem erfindungsgemäß weniger bevorzugten 1-Komponenten-Polyurethanlacken handelt es sich um solche, deren Bindemittel aus NCO-Prepolymeren mit einem NCO-Gehalt von ca. 3 bis 16 Gew.-% bestehen und die durch Umsetzung der oben beispielhaft genannten einfachen Diisocyanate oder auch der beispielhaft genannten Lackpolyisocyanate mit unterschüssigen Mengen an Polyhydroxylverbindungen der genannten Art erhalten werden.

Gegebenenfalls dem Originallack zugesetzte Pigmente, Füllstoffe und Lackhilfsmittel wie Verlaufsmittel, Glanzverbesserer, Antiabsetzmittel, Verdicker, Thixotropiermittel, Antioxidantien, Hitzestabilisatoren usw. haben auf das erfindungsgemäße Verfahren keinen wesentlichen Einfluß. Je nach Löslichkeit finden sich diese Bestandteile entweder in der gemäß Verfahrensstufe (iv) anfallenden organischen Phase oder in der unlöslichen festen Phase wieder.

Bei dem in dem erfindungsgemäßen Verfahren in der Verfahrensstufe (i) eingesetzten Koagulierungsmittel handelt es sich z.B. um Substanzen, die eine gewisse Affinität gegenüber den organischen Bestandteilen der Lacke aufweisen und eine Entklebung, d.h. eine Verhinderung des Anklebens der Lackbestandteile an den eingesetzten Geräten und Behältern bewirken. Der Einsatz der Koagulierungsmittel in Kombination mit Wasser bewirkt im allgemeinen die Bildung eines mehrphasigen Systems, in welchem die organischen Bindemittelbestandteile des eingesetzten Lackes (in gemäß Abänderung des Verfahrens chemisch modifizierter Form) koaguliert bzw. an dem Koagulierungsmittel adsorbiert vorliegen. Diese festen Bestandteile können durch Flotation oder Sedimentation von der Hauptmenge des Wassers abgeschieden und kontinuierlich abgeräumt werden und bilden dann den in der Verfahrensstufe (i) isolierten Lackschlamm.

Geeignete Koagulierungsmittel sind beispielsweise oberflächenaktive Substanzen wie beispielsweise Metalloxide bzw. -hydroxide, wie Aluminiumoxide oder -hydroxide bzw. Eisenoxide-, -oxidhydrate oder -hydroxide, Schichtsilikate, Wachsemulsionen oder Tonerde. Bevorzugtes Koagulierungsmittel ist Tonerde. Die bevorzugten Koagulierungsmittel sind sowohl in Wasser als auch im verwendetem Extraktionsmittel unlöslich. Nicht geeignet sind solche Koagulierungsmittel, die mit dem Lack chemisch reagieren.

Bei den in der Verfahrensstufe (ii) eingesetzten Lösungs- bzw. Extraktionsmittel handelt es sich vorzugsweise um Lösungsmittel, die auch üblicherweise als Colöser in wasserverdünnbaren Einbrennmitteln eingesetzt werden, vorausgesetzt, daß eine gute Löslichkeit der organischen Lackbestandteile besteht. Geeignete Lösungsmittel sind beispielsweise Aceton, Methylethylketon, Methylisobutylketon, Cyclopentanon, Cyclohexanon, Ester wie Ethylacetat, Propylacetat, Butylacetat, Methoxypropylacetat, Ether wie Dibutyldiglykol, Dioxan, andere aprotische Lösungsmittel wie N-Methylpyrrolidon oder Dimethylformamid oder Mischungen hieraus. Weniger bevorzugt sind Aromaten wie Toluol oder Xylol.

Die Menge des Lösungsmittels wird so gewählt, daß in Verfahrensstufe (iii) durch Rühren eine gute Durchmischung des Lackschlamms und der gegenüber Isocyanatgruppen hochreaktiven Verbindung möglich wird, und daß außerdem in Verfahrensstufe (iv) eine gute Abtrennung zwischen fester und flüssiger Phase erreicht wird. Üblicherweise ist die 0,5- bis 5-fache Menge, bezogen auf den Lackschlamm, erforderlich und ausreichend.

Bei den in der Verfahrensstufe (iii) eingesetzten Verbindungen mit gegenüber Isocyanatgruppen reaktionsfähigen Gruppen handelt es sich um im Sinne der Isocyanat-Additionsreaktion monofunktionelle Verbindungen, eines unter 600, vorzugsweise unter 200 liegenden Molekulargewichts, die gegenüber Isocyanatgruppen eine höhere Reaktionsbereitschaft aufweisen als Wasser und als die in 2-Komponenten-Polyurethanlacken eingesetzten Reaktivkomponenten (insbesondere die oben genannten Polyhydroxylverbindungen); primäre oder sekundäre Monoamine mit aliphatisch gebundenen Aminogruppen, beispielsweise n-Butylamin, Isobutylamin, n-Pentylamin, n-Hexylamin, n-Stearylamin, Dimethylamin, Diethylamin-, Di-n-propylamin, Di-n-butylamin, Di-n-pentylamin, Di-n-hexylamin, Diisopropylamin, Diisobutylamin, N-Methyl-n-stearylamin, Di-n-stearylamin, Cyclohexylamin, Piperidin, Pyrrolidon oder Morpholin. Ebenfalls geeignet, jedoch weniger bevorzugt sind aromatische, primäre und sekundäre, monofunktionelle Amine. Im Falle der Verwendung von leicht flüchtigen Monoaminen, insbesondere sekundären Monoaminen stellen diese Verbindungen Blockierungsmittel dar, die bei der Aushärtung der letztendlich erhaltenen Einbrennlacke wieder abgespalten werden;
zwei weitere Gruppen von Verbindungen mit gegenüber Isocyanatgruppen reaktionsfähigen Gruppen, die bei der Aushärtung der Einbrennlacke wieder abgespalten werden, sind Oxime, wie beispielsweise Aceton-, Butanon- oder Cyclohexanonoxim und Lactame, wie beispielsweise Butyrolactam oder Caprolactam;
eine weitere Gruppe von Verbindungen, die in der Verfahrensstufe (iii) eingesetzt wird, sind eine primäre oder sekundäre aliphatisch gebundene Aminogruppe aufweisende Aminoalkohole, die wegen der extrem unterschiedlichen Reaktivität der Amino- und Hydroxylgruppen in erster Näherung als "im Sinne der Isocyanat-Additionsreaktion monofunktionell" bezeichnet werden können, insbesondere dann, wenn sie in solchen Mengen eingesetzt werden, daß auf jede Isocyanatgruppe mindestens eine Aminogruppe entfällt. Beispiele derartiger Aminoalkohole sind 2-Aminoethanol, 2-(Methylamino)-ethanol, Diethanolamin, 3-Amino-1-propanol, 1-Amino-2-propanol, Diisopropanolamin, 2-Amino-2-methyl-propanol, 2-Amino-2-methyl-1,3-propandiol, 2-Amino-2-hydroxymethyl-1,3-propandiol oder deren Gemische.

Im Falle der Verwendung von derartigen Aminoalkoholen resultieren in der Verfahrensstufe (v) hydroxyfunktionelle Bindemittel, die in Verfahrensstufe (vii) zusammen mit dem wasserverdünnbaren Einbrennbindemittel durch geeignete Vernetzerharze ausgehärtet werden können.

Ebenfalls geeignet sind Mischungen der oben genannten und gegebenenfalls anderer Verbindungen, die gegenüber Isocyanatgruppen eine höhere Reaktivitätsbereitschaft aufweisen als Wasser und als die in dem 2-Komponenten-Polyurethanlack eingesetzte Reaktivkomponente.

Besonders bevorzugte Verbindungen mit gegenüber Isocyanatgruppen reaktionsfähigen Gruppen, die in der Verfahrensstufe (iii) eingesetzt werden sind die beispielhaft genannten, sekundären Monoamine und Aminoalkohole.

Die Menge der in der Verfahrensstufe (iii) eingesetzten Komponente mit gegenüber Isocyanatgruppen reaktionsfähigen Gruppen wird im allgemeinen so gewählt, daß auf jede Isocyanatgruppe 0,25 bis 5, vorzugsweise 0,8 bis 1,2 gegenüber Isocyanatgruppen hochreaktive Gruppen der genannten Art entfallen.

Bei der Durchführung des erfindungsgemäßen Verfahrens werden die als "Overspray" anfallenden Lackbestandteile wie ausgeführt mit Wasser ausgewaschen, wobei das Wasser bereits das Koagulierungsmittel in aufgeschlämmter Form enthalten kann oder wobei dieses dem Gemisch aus Wasser und Lackbestandteilen nachträglich zugesetzt wird. Anschließend wird der sich dabei bildende Lackschlamm durch Flotation oder Sedimentation abgeschieden und durch Dekantieren, Filtrieren oder ähnliche Methoden von der Hauptmenge des Wassers befreit. Der so isolierte Lackschlamm wird dann in der nachfolgenden Verfahrensstufe (ii) mit dem Lösungsmittel vermischt, worauf das hierbei resultierende Gernisch in der Verfahrensstufe (iii) mit den gegenüber Isocyanatgruppen reaktionsfähigen Verbindungen umgesetzt wird. Diese Umsetzung erfolgt im allgemeinen innerhalb des Temperaturbereichs von 0 bis 150°C, vorzugsweise von 10 bis 80°C und wird solange durchgeführt, bis die Isocyanatgruppen völlig abreagiert sind.

Gemäß einer möglichen, jedoch weniger bevorzugten Ausführungsform des erfindungsgemäßen Verfahrens werden die in der Verfahrensstufe (iii) einzusetzenden, gegenüber Isocyanatgruppen hochreaktiven Verbindungen entsprechend der Verfahrensweise der DE-OS 4 214 943 im Wasser der Spitzkabine gelöst oder emulgiert, so daß in der Verfahrensstufe (ii) unmittelbar Lösungen von entsprechend chemisch modifizierten Bindemitteln anfallen, die sofort der Verfahrensstufe (iv) zugeführt werden können.

In der Verfahrensstufe (iv) werden die chemisch modifizierten, im Extraktionsmittel löslichen Bindemittelbestandteile gegebenenfalls unter gleichzeitigen kräftigem Rühren und/oder unter Erwärmen bis maximal 100°C, vorzugsweise maximal 50°C vom Koagulierungsmittel extrahiert. Zur Verbesserung der Ausbeute kann es erforderlich sein, das noch vorliegende Wasser durch Phasentrennung, Destillation oder azeotrope Destillation zu entfernen. Anschließend werden die festen Bestandteile durch Filtration oder Dekantieren von der Lösungsmittelphase abgetrennt.

Die schonende Aufkonzentration der Bindemittel gemäß Verfahrensstufe (v) bis auf einen Festkörpergehalt von 60 bis 100 %, vorzugsweise 80 bis 100 %, kann durch übliche Verfahren wie Destillation oder Dünnschichtverdampfung erfolgen. Das hierbei wiedergewonnene Lösungsmittel kann in der Regel ohne Reinigung im nächsten Aufarbeitungsprozeß wieder eingesetzt werden.

Als in der Verfahrensstufe (vi) eingesetzte Festharze oder als organische Lösung der Festharze können alle in der Lackindustrie im Bereich wasserverdünnbarer Einbrennmittel übliche Harze verwendet werden. Dieses sind vor allem hydroxi-, amino-, epoxi-, oder säurefunktionellen Polyester-, Polyacrylat-, Polyether-, Polyesterurethan-, Polyurethan- oder Polybutadienfestharze oder deren Gemische.

Die Harze werden üblicherweise in einem organischen Lösemittel oder in Substanz hergestellt. Aufgrund von eingebauten anionischen oder kationischen Gruppen und/oder wegen der Mitverwendung von externen Emulgatoren sind die Harze wasserlöslich bzw. wasserdisbergierbar. Vor dem Dispergieren werden die Harze üblicherweise, im Falle einer anionischen Modifizierung bevorzugt mit Aminen, im Falle einer kationischen Modifizierung bevorzugt mit organischen Säuren, neutralisiert.

Im erfindungsgemäßen Verfahren werden diese Festharze oder die organische Lösung dieser Festharze in der Verfahrensstufe (vi) vor dem Dispergieren mit den in der Verfahrensstufe (v) anfallenden, gegebenenfalls noch geringe Lösungsmittelmengen aufweisenden Bindemitteln gemischt. Die Mischung erfolgt bei einer Temperatur zwischen 10 und 150°C, bevorzugt zwischen Raumtemperatur und 120°C. Die Mengenverhältnisse der Abmischkomponenten werden dabei so gewählt, daß der Anteil der erfindungsgemäß modifizierten, gegebenenfalls zusammen mit Restlösungsmitteln in der Stufe (v) anfallenden Bindemittel in dem Gemisch aus diesem Bindemittel und dem genannten Festharz, jeweils bezogen auf Feststoff, bei 1 bis 60, vorzugsweise 5 bis 40 Gew.-% liegt.

Das Dispergieren in Wasser erfolgt wie es für das wasserverdünnbare Festharz allein auch üblich ist. Der Festkörpergehalt der Endprodukte liegt zwischen 20 und 75 %, bevorzugt 30 und 60 %.

Die so hergestellten wäßrigen Dispersionen können in Kombination mit geeigneten Vernetzerharzen zur Herstellung von wäßrigen Einbrennlacken verwendet werden Geeignete Vernetzerharze sind insbesondere blockierte Polyisocyanate der an sich bekannten Art bzw. Aminovernetzerharze der ebenfalls an sich bekannten Art. Geeignete Vernetzerharze werden beispielsweise in DE-OS 4 221 924 beschrieben.

Die Einbrennlacke können selbstverständlich die üblichen Hilfs- und Zusatzmittel der Lacktechnologie enthalten.

In den folgenden Beispielen beziehen sich alle Angaben in "%" oder "Teilen" auf das Gewicht.

### Beispiel 1

In einer Kabine mit Wasserabscheidung wird 1 kg Lack verspritzt. Es handelt sich um einen lösungsmittelhaltigen Klarlack, dessen Bindemittel aus einem handelsüblichen Polyacrylat (®Desmophen A 450, Bayer AG) mit einem OH-Gehalt von 2,0 %, bezogen auf das Festharz, und der äquivalenten Menge trimerisiertem Hexamethylendiisocyanat ((®Desmodur N 3390, Bayer AG) mit einem NCO-Gehalt von 19,4 % besteht. Als entklebend wirkendes Koaguliermittel ist dem Kabinenwasser in einer Konzentration von 0,4 % ®Ipafloc, ein Tonerprodukt der Firma IPA, zugesetzt worden. Das Gemisch aus Kabinenwasser, Ipafloc und Overspray wird in ein Absetzbecken geleitet, wo es mit 20 %, bezogen auf Overspray, ®Ipased, einem handelsüblichen Koaguliermittel auf Tonerde-Basis der Fa. IPA, vermischt wird.

Der abgesetzte Lackschlamm wird abgeräumt, das überschüssige Wasser abdekantiert und der Lackschlamm in einen Rührbehälter gefüllt. Bei Raumtemperatur werden unter kräftigem Rühren 2,5 kg Butylacetat und, entsprechend der äquimolaren Isocyanatmenge, Diisopropylamin zugegeben. Nach 3 Stunden bei Raumtemperatur werden die unlöslichen Bestandteile abfiltriert und erneut mit Butylacetat gewaschen. Die geringe Menge Wasser wird von den vereinigten Filtraten abgetrennt. Die Filtrate, welche 90 % des ursprünglich eingesetzten Lackbindemittels enthalten, werden im Vakuumverdampfer bis auf einen Festkörpergehalt von 85 % aufkonzentriert. Das abdestillierte Lösungsmittel kann ohne weitere Aufarbeitung im nächsten Aufarbeitungsprozeß wiederverwendet werden.

### Beispiel 2

Man verfährt wie in Beispiel 1 und verspritzt 1 kg Lack unter Verwendung des gleichen Polyisocyanates und Koaguliermittels. Als Polyol wird ein handelsüblicher hydroxygruppenhaltiger Polyester ( (®Desmophen 670, Bayer AG) mit einem OH-Gehalt von 4,3 %, bezogen auf das Festharz verwendet.

Der abgesetzte Lackschlamm wird abgeräumt, das überschüssige Wasser abdekantiert und der Lackschlamm in einen Rührbehälter gefüllt. Bei Raumtemperatur werden unter kräftigem Rühren 2,5 kg N-Methylpyrrolidon und, entsprechend der äquimolaren Isocyanatmenge, ein äquimolares Gemisch aus Diethanolamin und Di-n-butylamin zugegeben. Nach 3 Stunden bei Raumtemperatur werden die unlöslichen Bestandteile abfiltriert und erneut mit N-Methylpyrrolidon gewaschen. Die Filtrate, welche 90 % des ursprünglich eingesetzten Lackbindemittels enthalten, werden im Vakuumverdampfer bis auf einen Festkörpergehalt von 85 % aufkonzentriert. Das abdestillierte Lösungsmittel kann im nächsten Aufarbeitungsprozeß wiederverwendet werden.

### Beispiel 3

Bei den in diesem Beispiel eingesetzten, nach Neutralisation mit Amin wasserverdünnbaren Polyesterfestharz handelt es sich um ein übliches, Hydroxylgruppen aufweisendes Polyesterharz mit einem Hydroxylgruppengehalt von 3,6 Gew.-%, welches wie folgt hergestellt worden ist:

26,5 Teile Neopentylglykol, 16,1 Teile Trimethylolpropan und 36,2 Teile Isophthalsäure werden in einem Dreihalskolben unter Rühren auf 190°C erhitzt. Die Kopftemperatur beträgt 93°C bis 99°C. Bei einer Säurezahl des Produktes von 15, werden 21,2 Teile Adipinsäure zugegeben und die Veresterung bis zu einer Säurezahl von 40 fortgeführt.

80 Teile des genannten Polyesterfestharzes werden vor der Neutralisation und vor der Wasserzugabe mit 13 Teilen n-Butylglykol und 20 Teilen des aufgearbeiteten, noch Restlösungsmittel enthaltenden Bindemittels aus Beispiel 1 versetzt. Die Mischung wird bei 80°C im Verlauf von 2 Stunden homogenisiert. Nach Zugabe von 5 Teilen Dimethylethanolamin, wird die Mischung in Wasser dispergiert. Der Festkörpergehalt des Bindemittels beträgt 40 %. Es wird mit 35 Teilen Aminovernetzerharz ((®Luwipal LR 8839, BASF AG) abgemischt.

Nach Applikation des so hergestellten wäßrigen Klarlacks auf einem Prüfblech in einer Trockenfilmstärke von 120 µm und Aushärtung bei 160°C während eines Zeitraums von 30 min, erhält man einen klaren Lackfilm, der in seinen anwendungstechnischen Eigenschaften, wie Härte, Haftung oder Beständigkeit, die Anforderungen z.B. eines industriellen Einbrennlackes erfüllt.

## Patentansprüche

1. Verfahren zur Wiederverwertung des in Form von Lackschlamm beim Verspritzen von lösungsmittelhaltigen 2-Komponenten-Polyurethanlacken oder von feuchtigkeitstrocknenden 1-Komponenten-Polyurethanlacken in Spritzkabinen anfallendem "Oversprays" durch
(i) Isolieren des Lackschlamms unter Einsatz von Wasser und Koaguliermitteln,
(ii) Vermischen des aus Lackbestandteilen und Koaguliermitteln, sowie Wasser bestehenden Lackschlamms, gegebenenfalls nach Entfernung zumindest eines Teils des Wassers, mit einem gegenüber Isocyanatgruppen inerten organischen Lösungsmittel
(iii) Umsetzung der in dem gemäß (ii) erhaltenen Gemisch vorliegenden freien Isocyanatgruppen mit im Sinne der Isocyanat-Additionsreaktion monofunktionnellen Verbindungen eines unter 600 liegenden Molekulargewichts, welche gegenüber Isocyanatgruppen eine höhere Reaktivität aufweisen als Wasser oder als die gegebenenfalls in dem 2-Komponenten-Polyurethanlack mitverwendete Reaktivkomponente mit gegenüber Isocyanatgruppen reaktionsfähigen Gruppen, ausgewählt aus der Gruppe bestehend aus primären Monoaminen mit aliphatisch gebundenen Aminogruppen, sekundären Monoaminen mit aliphatisch gebundenen Aminogruppen, Aminoalkoholen mit einer aliphatisch gebundenen primären oder sekundären Aminogruppe, Oximen, und Gemischen derartiger Verbindungen,
(iv) Befreien der gemäß (iii) anfallenden organischen Phase von gegebenenfalls vorliegenden unlöslichen Bestandteilen und Wiederverwertung der gelösten, organischen Bestandteile,
dadurch gekennzeichnet, daß man
(v) die gemäß (iv) anfallende Lösung der Bindemittel bis auf einen Festkörpergehalt von 60 bis 100 Gew.-% vom Lösungsmittel befreit,
(vi) die gemäß (v) anfallenden, gegebenenfalls noch Lösungsmittel enthaltenden Bindemittel mit dem Festharz wasserverdünnbarer Ein- brennbindemittel vermischt und
(vii) die gemäß (vi) anfallende Bindemittelmischung in Wasser dispergiert.

2. Verfahren gemäß Anspruch 1, dadurch gekennzeichnet, daß man in der Verfahrensstufe (vi) die Mengenverhältnisse der Abmischkomponenten so wählt, daß der Anteil des gemäß Stufe (v) erhaltenen Bindemittels in dem Gemisch bei 5 bis 40 Gew.-%, jeweils bezogen auf Feststoff, beträgt.

3. Abänderung der Verfahren gemäß Anspruch 1 und 2, dadurch gekennzeichnet, daß man die gemäß Verfahrensstufe (iii) einzusetzenden, gegenüber Isocyanatgruppen hochreaktiven Verbindungen in dem gemäß Stufe (i) eingesetzten Wasser löst oder emulgiert.

## Claims

1. Process for reusing the "overspray" which arises in spraying booths in the form of lacquer sludge during spraying of two-component polyurethane lacquers containing solvent or of moisture-curing single component polyurethane lacquers by
(i) isolating the lacquer sludge using water and coagulants,
(ii) mixing the lacquer sludge consisting of lacquer constituents and coagulants as well as water, optionally after removal of at least a proportion of the water, with an organic solvent which is inert towards isocyanate groups
(iii) reacting the free isocyanate groups present in the mixture obtained according to (ii) with compounds which are monofunctional for the purposes of the isocyanate addition reaction, have a molecular weight of below 600 and are more reactive towards isocyanate groups than water or than the reactive component optionally also used in the two-component polyurethane lacquer having groups reactive towards isocyanate groups, selected from the group consisting of primary monoamines having aliphatically attached amino groups, secondary monoamines having aliphatically attached amino groups, aminoalcohols having an aliphatically attached primary or secondary amino group, oximes and mixtures of such compounds,
(iv) removing any optionally present insoluble constituents from the organic phase arising according to (iii) and reusing the dissolved, organic constituents,
characterised in that
(v) solvent is removed from the binder solution arising according to (iv) until a solids content of 60 to 100 wt.% is obtained,
(vi) the binder, optionally still containing solvent arising according to (v), is mixed with the solid resin of water-dilutable stoving binders and
(vii) the binder mixture arising according to (vi) is dispersed in water.

2. Process according to claim 1, characterised in that the quantity ratios of the blend components in process stage (vi) are selected such that the proportion of the binder obtained according to stage (v) amounts to 5 to 40 wt.% in the mixture, in each case relative to solids.

3. Modification of the process according to claims 1 and 2, characterised in that the compounds highly reactive towards isocyanate groups which are to be used according to process stage (iii) are dissolved or emulsified in the water used according to stage (i).

## Revendications

1. Procédé pour valoriser les pertes de peinture de polyuréthanne à deux composants contenant des solvants ou de peinture de polyuréthanne à un composant séchant sous l'action de l'humidité qui n'ont pas atteint le support dans une cabine de pulvérisation, recueillies sous la forme de boues de peinture, dans lequel
(i) on isole les boues de peinture à l'aide d'eau et d'agents coagulants,
(ii) on mélange les boues de peinture consistant en constituants de la peinture, agents coagulants et eau, le cas échéant après élimination d'une partie au moins de l'eau, avec un solvant organique inerte à l'égard des groupes isocyanate
(iii) on fait réagir les groupes isocyanate libres contenus dans le mélange obtenu en (ii) avec des composés monofonctionnels au sens de la réaction d'addition des isocyanates, d'un poids moléculaire inférieur à 600, qui ont à l'égard des groupes isocyanate une réactivité supérieure à celle de l'eau ou à celle du composant réactif utilisé le cas échéant dans la peinture de polyuréthanne à deux composants et qui contient des groupes réactifs à l'égard des groupes isocyanate, ces composés étant choisis dans le groupe consistant en les monoamines primaires à groupes amino à liaisons aliphatiques, les monoamines secondaires à groupes amino à liaisons aliphatiques, les aminoalcools à un groupe amino primaire ou secondaire à liaisons aliphatiques, les oximes et leurs mélanges,
(iv) on débarrasse la phase organique obtenue en (iii) des constituants insolubles éventuels et on récupère les constituants organiques dissous,
ce procédé se caractérisant en ce que
(v) on débarrasse la solution de liant obtenue en (iv) du solvant, jusqu'à une teneur en matières solides de 60 à 100 % en poids,
(vi) on mélange le liant obtenu en (v), contenant le cas échéant encore du solvant, avec la résine solide de liants à cuire au four diluables à l'eau, et
(vii) on disperse dans l'eau le liant mélangé obtenu en (vi).

2. Procédé selon la revendication 1, caractérisé en ce que, au stade opératoire (vi) on choisit les proportions relatives des composants du mélange en sorte que la proportion du liant obtenue au stade opératoire (v), en matières solides, représente de 5 à 40 % du poids du mélange.

3. Variante du procédé selon la revendication 1 et 2, caractérisée en ce que les composés à haute réactivité à l'égard des groupes isocyanate à mettre en oeuvre au stade opératoire (iii) sont dissous ou émulsionnés dans l'eau mise en oeuvre au stade opératoire (i).
